# EUROPÄISCHE PATENTSCHRIFT

(11) **EP 0 729 285 B1**
(45) Veröffentlichungstag und Bekanntmachung des Hinweises auf die Patenterteilung: **28.04.2004**
(21) Anmeldenummer: 96102712.5
(22) Anmeldetag: 23.02.1996
(51) Int. Cl.: H04Q 7/36, H04B 7/26

(54) **Zuweisung einer Trägerfrequenz in einem SDMA-Funksystem**
Carrier frequency allocation in a SDMA radio system
Affectation de fréquence porteuse dans un système radio SDMA

(30) Priorität: 24.02.1995 DE 19506439
(43) Veröffentlichungstag der Anmeldung: 28.08.1996
(73) Patentinhaber: ALCATEL, 75008 Paris (FR)
(72) Erfinder: Tangemann, Michael, 71229 Leonberg (DE); Hoek, Cornelis, 71732 Tamm (DE); Schlesinger, Heinz, 74395 Mundelsheim (DE)
(74) Vertreter: Knecht, Ulrich Karl, Dipl.-Ing.

(56) Entgegenhaltungen:
- EP-A- 0 659 028
- WO-A-93/12590
- WO-A-93/23935
- WO-A-95/09490
- DE-A- 4 134 357

## Beschreibung

Die Erfindung betrifft ein Verfahren zur Zuweisung einer Trägerfrequenz in einem SDMA-Funksystem, eine Steuereinrichtung mit einer prozessorgesteuerten Schaltung zur Durchführung des Verfahrens sowie eine Funkfeststation für das SDMA-Funksystem, die eine solche prozessorgesteuerte Schaltung enthält (SDMA: Space Division Multiple Access).

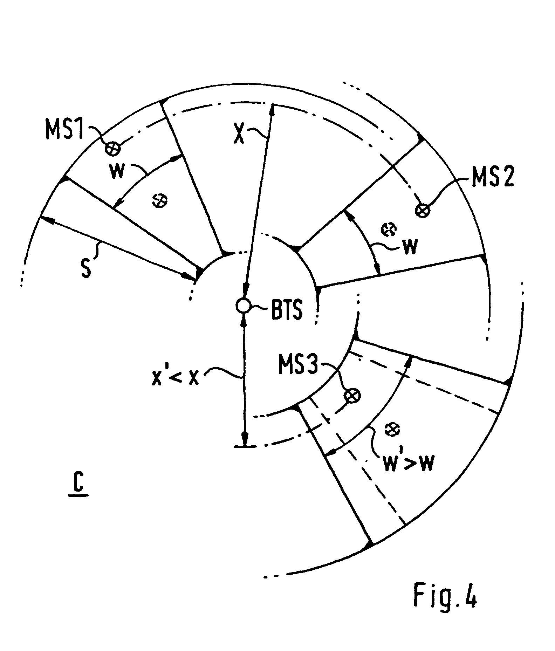

Aus WO 93/12590 sind ein solches Verfahren und solche Vorrichtungen bekannt. Dort wird ein SDMA-Funksystem beschrieben, bei dem eine Funkfeststation über eine Antennenanordnung (phasengesteuerte Gruppenantenne in Fig. 4) Funksignale aus verschiedenen Raumrichtungen von entfernten Funkstationen (Mobilstationen 20, 22 und 24 in Fig. 4) gleichzeitig auf einer Trägerfrequenz empfängt. Weiterhin wird dort beschrieben, daß die Funkfeststation auf einer anderen Trägerfrequenz Funksignale gerichtet an die entfernten Funkstationen sendet. Demnach werden dort Funksignale sowohl in Aufwärtsrichtung als auch in Abwärtsrichtung nach dem SDMA-Prinzip übertragen, wodurch eine räumliche Wiederverwendung vorgegebener Trägerfrequenzen erfolgen kann. Um den entfernten Funkstationen diese Trägerfrequenzen zum Senden bzw. Empfangen zuzuweisen, werden dort die entfernten Funkstationen nach den Raumrichtungen unterschieden, die eine als SDMA-Prozessor SDMAP bezeichnete und in die Funkfeststation integrierte Steuereinrichtung errechnet (s. S.5, letzer Abs. und S. 4, zweiter Abs.). Weiterhin werden dort mittels Laufzeitmessungen der Funksignale die Entfernungen zwischen der Funkfeststation und der entfernten Funkstationen für eine Neuzuweisung der Trägerfrequenzen ermittelt (s. S.23, Abschnitt "SDMA Controller").

Auch wenn in WO 93/12590 das Problem der Interferenzen zwischen den Funksignalen angesprochen ist, so sind dort beschriebene Maßnahmen kaum geeignet dieses Problem, das insbesondere an der Funkfeststation beim Empfang der Funksignale auftritt, möglichst einfach zu lösen. Zumindest die zur Ermittlung der Entfernungen benötigten Laufzeitmessungen sind aufwendig und nur über bereits bestehende Duplex-Funkverbindungen möglich. Weiterhin ist diese Maßnahme sehr störempfindlich gegen Mehrwegeempfang, der häufig etwa bei Mobilfunkübertragungen auftritt.

Aufgabe der Erfindung ist es, obiges Problem durch Angabe eines Verfahrens zur Zuweisung einer Trägerfrequenz in einem SDMA-Funksystem sowie durch Angabe von Vorrichtungen zur Durchführung des Verfahrens einfacher und vollständiger zu lösen.

Gelöst wird die Aufgabe durch ein Verfahren mit den Merkmalen nach Anspruch 1, durch eine Steuereinrichtung mit den Merkmalen nach Anspruch 12 und durch eine Funkfeststation mit den Merkmalen nach Anspruch 13.

Demnach wird mittels einer die Funkfeststation steuernden Steuereinrichtung eine Trägerfrequenz nur dann den entfernten Funkfeststationen zugewiesen, falls diese Funksignale aus Raumrichtungen senden, die sich voneinander zumindest um einen vorgebbaren Raumwinkel unterscheiden und falls die Funksignale am Ort der Funkfeststation Empfangspegel erzeugen, die innerhalb eines vorgebbaren Pegelbereichs liegen. Somit erfolgt die Zuweisung einer Trägerfrequenz, die für eine Abwärts-Funkverbindung benutzt werden kann, anhand von Parametern, die jederzeit durch Auswertung der von der Funkfeststation empfangenen Funksignale möglich ist. Im allgemeinen werden die Raumrichtungen sowie die Empfangspegel ohnehin bereits für die SDMA-Funkübertragung als solche ermittelt, so daß durch einfachen Vergleich dieser ermittelten Parameter mit dem vorgegebenen Raumwinkel bzw. dem vorgegebenen Pegelbereich die erfindungsgemäße Lösung mit geringem Aufwand realisierbar ist.

Vorteilhafte Ausgestaltungen sind den abhängigen Ansprüchen zu entnehmen.

Im weiteren wird die Erfindung anhand von Ausführungsbeispielen und unter Zuhilfenahme folgender Figuren beschrieben:
- Fig. 1,: die eine Funkzelle eines SDMA-Mobilfunksystems sowie das Empfangsdiagramm einer die Funkzelle versorgenden Funkfeststation zeigt;
- Fig. 2,: die ein erstes Beispiel einer Zuweisung von Trägerfrequenzen innerhalb der Funkzelle zeigt;
- Fig. 3,: die ein zweites Beispiel einer Zuweisung von Trägerfrequenzen zeigt;
- Fig. 4,: die ein Ablaufdiagramm eines Verfahrens zur Zuweisung der Trägerfrequenzen gemäß dem zweiten Beispiel nach Fig. 3 zeigt;
- Fig. 5,: die eine Variante des zweiten Beispiels zeigt, welche besonders vorteilhaft bei Mehrwegeempfang einsetzbar ist.

Die nun beschriebenen Ausführungsbeispiele beziehen sich auf erfindungsgemäß ausgestattete SDMA-Mobilfunksysteme. Daher werden die entfernten Funkstationen im folgenden kurz Mobilstationen genannt. Die Ausführungen beschreiben sehr deutlich die Erfindung und stehen beispielhaft für weitere Anmeldungen der Erfindung, auch solchen außerhalb des Mobilfunks.

Die in Fig. 1a dargestellte Funkzelle wird zentral von einer Funkfeststation BTS versorgt. Dazu enthält die Funkfeststation BTS eine Antennenanordnung A, die eine phasengesteuerte Gruppenantenne ist, und eine damit verbundene Funkvorrichtung TRX, die als SDMA-Funksendeempfänger ausgebildet ist. Diese Komponenten dienen zur SDMA-Funkübertragung zwischen der Funkfeststation BTS und Mobilstationen MS1, MS2 und MS3, die sich innerhalb der Funkzelle befinden. Ein SDMA-Funksendeempfänger als solcher ist z.B. beschrieben in dem Artikel "The performance Enhancement of Multibeam Adoptive Base Station Antennas for Cellular Land Mobile Radio Systems" von Simon C. Swales et al.aus IEEE Transactions on Vehicular Technology, Seiten 56 bis 67, Band 39/1, Feb. 1990.

Weiterhin enthält die Funkfeststation BTS eine mit dem SDMA-Funksendeempfänger TRX verbundene Steuereinrichtung CTR mit einer prozessorgesteuerten Schaltung µP, die das erfindungsgemäße Verfahren durchführt, um die SDMA-Funkübertragung so zu steuern, daß nur solche der Mobilstationen MS1, MS2 und MS3 auf ein und dieselbe Trägerfrequenz f geschaltet werden, deren Funksignale die Funkfeststation BTS aus hinreichend verschiedenen Raumrichtungen und mit hinreichend gleichen Empfangspegeln empfängt.

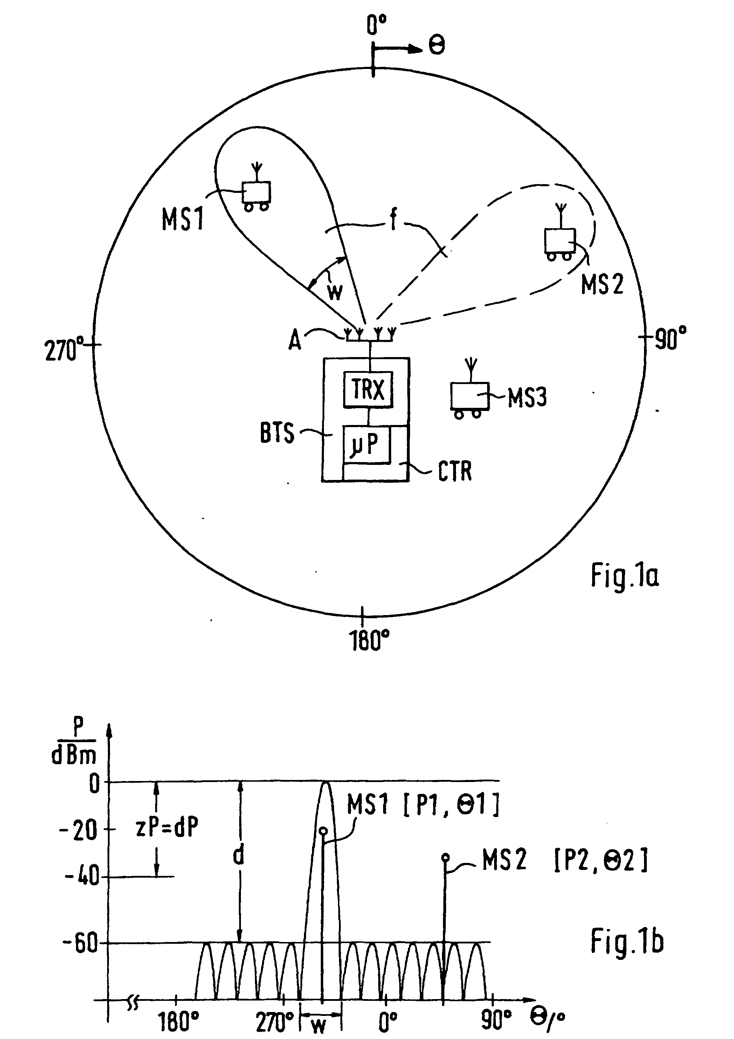

In Fig. 1b ist ein Empfangsdiagramm der Funkfeststation BTS dargestellt, bei dem das Funksignal der ersten Mobilstation MS1 aus einer ersten Raumrichtung θ1 = 325° mit einem ersten Empfangspegel P1 = -20 dBm über eine erste Richtkeule empfangen wird. Das Funksignal der zweiten Mobilstation MS2 wird aus einer zweiten Raumrichtung Θ2 = 60° mit einem zweiten Empfangspegel P2 = -30 dBm über eine zweite Richtkeule empfangen. Demnach unterscheiden sich beide Raumrichtungen Θ1 und Θ2 voneinander um |Θ1 - Θ2| = 85°. Die beiden Empfangspegel P1 und P2 differieren um |P1 - P2| = 10 dB.

Um zu prüfen, ob die beiden Mobilstationen MS1 und MS2 gleichzeitig auf der einen Trägerfrequenz f senden dürfen, wird erfindungsgemäß ein Raumwinkel w und ein Pegelbereich zP vorgegeben, der die Mindestdifferenz für die Raumrichtungen bzw. die Maximaldifferenz für die Empfangspegel angibt. Hier wurde der Raumwinkel w gleich der Richtkeulenbreite der Antennenanordnung mit w = 30° vorgegeben. Der Pegelbereich zP wurde hier an den Dynamikumfang dP = 40 dB angepaßt, den der SDMA-Funksendeempfänger TRX aufweist. Der Pegelbereich zP wird so vorgegeben, daß er weder den Dynamikbereich dP des Empfangsteils im SDMA-Funksendeempfänger noch die Nebenzipfeldämpfung d (hier d = 60 dB) der Antennenanordnung übersteigt. Zur Vorgabe des Pegelbereichs zP können auch noch weitere Kriterien herangezogen werden, wie etwa ein geforderter Signal-Rausch-Abstand oder eine gewünschte Funkschwund-Reserve.

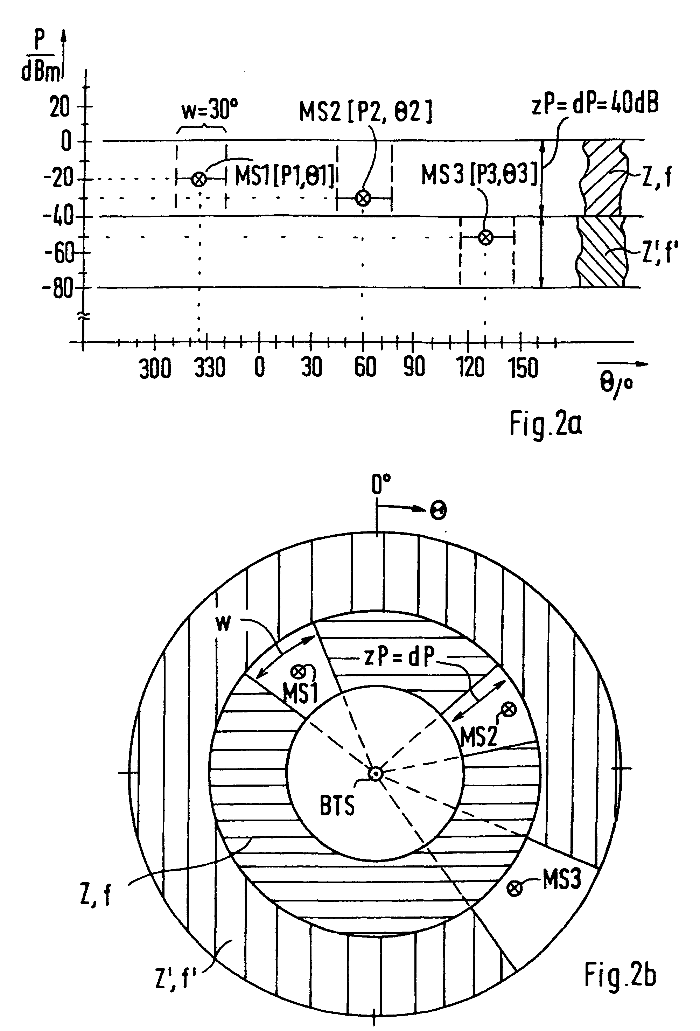

Als erstes Ausführungsbeispiel ist in Fig. 2 eine Zuteilung von zwei Trägerfrequenzen f und f' dargestellt, die zur SDMA-Funkübertragung innerhalb von zwei fest vorgegebenen Pegelbereichen zP dienen. Die Darstellungen nach Fig. 2 beziehen sich auf die in Fig. 1 gezeigte Funkzelle.

Wie in Fig. 2a dargestellt, liegt der Pegelbereich für die erste Trägerfrequenz f zwischen 0 d8m und -40 dBm und der Pegelbereich für die zweite Trägerfrequenz f' zwischen -40 dBm und -80 dBm. Demnach dürfen die von den Mobilstationen erzeugten Empfangspegel P1, P2 und P3 auf der jeweiligen Trägerfrequenz nur um maximal 40 dB schwanken. Die Zuweisung der Trägerfrequenzen f und f' erfolgt beim Verbindungsaufbau, d.h. mittels Auswertung von Signalisierungssignalen, die zu Beginn einer Funkverbindung auf einer für die Signalisierung vorgesehenen Trägerfrequenz (Signalisierungskanal) von einer Mobilstation (z.B. MS3) an die Funkfeststation BTS gesendet werden. Darüberhinaus wird die Zuweisung der Trägerfrequenzen durch Überwachung der Empfangspegel und der Raumrichtungen ständig überprüft. Falls die durch den Pegelbereich zP und Raumwinkel w vorgegebenen Kriterien nicht mehr erfüllt werden, wird eine neue Zuweisung der Trägerfrequenzen durchgeführt.

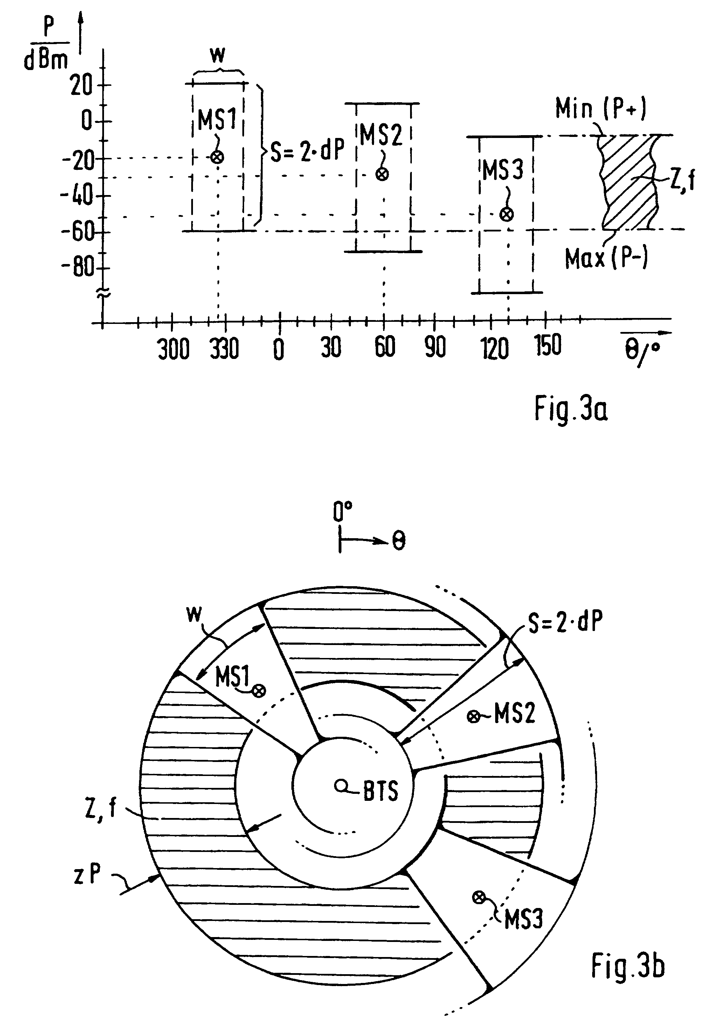

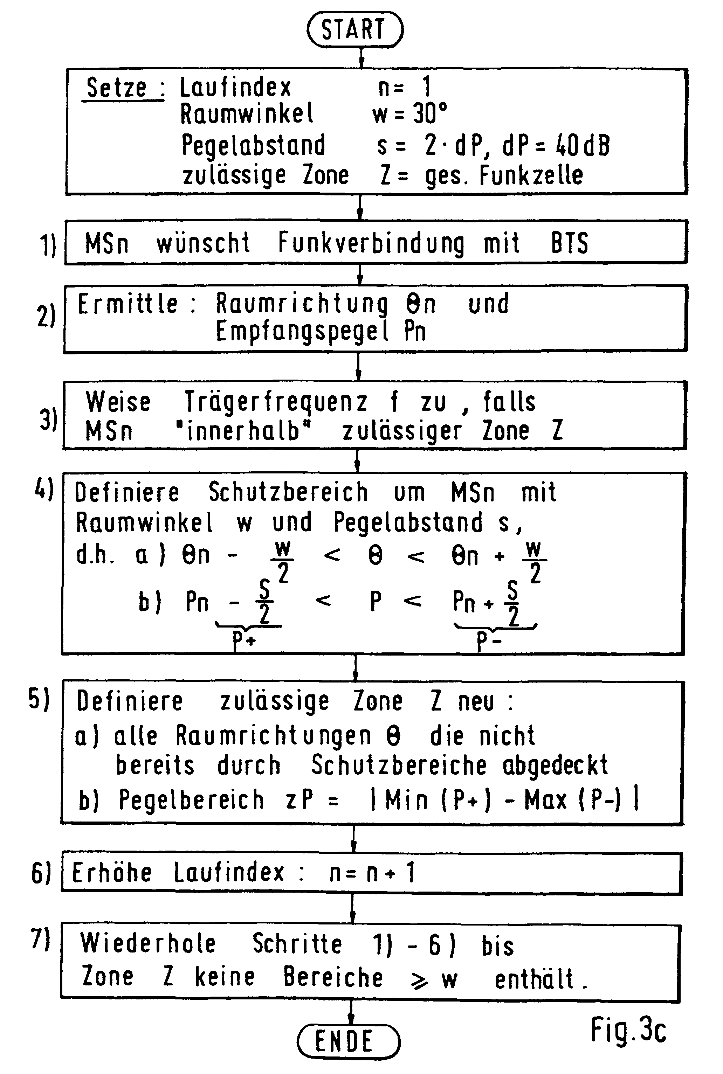

Die in den einzelnen Antennenelementen der Antennenanordnung A erzeugten Antennnensignale werden z.B. mittels dem sogenannten ESPRIT-Algorithmus ausgewertet, um die verschiedenen Raumrichtungen Θ1, Θ2, Θ3, aus denen die Mobilstationen MS1, MS2 bzw. MS3 senden, zu ermitteln. Weiterhin werden die Amplituden der Antennensignale zur Bestimmung der Empfangspegel P1, P2, P3 ausgewertet. Nach Ermittlung eines jeden Wertepaares wird geprüft, ob die ermittelten Werte **Θ** und P in einen zulässigen Bereich, (Zone Z oder Z') fallen. So wird etwa bei Wertepaar [Θ3, P3], das die Mobilstation MS3 kennzeichnet, geprüft, ob Θ3 sich um mindestens w = 30° von den bereits ermittelten Raumrichtungen Θ1 und Θ2 unterscheidet und ob P3 innerhalb eines der beiden Pegelbereiche zP liegt. Damit ist diejenige Trägerfrequenz bestimmt, die der Mobilstation zugewiesen wird (hier Zuweisung von f' an MS3). Wie in Fig. 2a und b dargestellt ist durch Auswertung obiger Kriterien eine effiziente Trägerfrequenzbelegung möglich. Es wird darauf hingewiesen, daß die hier in Fig. 2b dargestellten zulässigen Zonen Z und Z' keinen geographischen Teilbereichen der Funkzelle entsprechen. Vielmehr sind diese Zonen eine anschauliche Darstellung einer räumlichen Verteilung der in Fig. 2a gezeigten Pegelbereiche zP von 0 bis -40 dBm bzw. von -40 bis -80 dBm. Durch die feste Vorgabe der Pegelbereiche zP können einfache Funkempfänger eingesetzt werden, die optimal auf ihren Pegelbereich abgestimmt sind: Jedoch kann die Kapazitätsausnutzung der vorhandenen Trägerfrequenzen noch durch zusätzliche erfindungsgemäße Maßnahmen gesteigert werden, wie die folgende Beschreibung der Fig. 3 bis 4 verdeutlicht.

Fig. 3 zeigt ein zweites Ausführungsbeispiel für die Zuweisung einer Trägerfrequenz f innerhalb der in Fig. 1 dargestellten Funkzelle. In Fig. 3a ist eine räumliche Verteilung der Empfangspegel aufgezeigt, die die Mobilstationen MS1 bis MS3 am Ort der Funkfeststation erzeugen. Die Angaben in Fig. 3a entsprechen denen in Fig. 2a. Eine Aufteilung der Funkzelle in verbotene und zulässige Bereiche zeigt Fig. 3b (vergl. Fig. 2b). Diese Aufteilung der Funkzelle wird mittels des in Fig. 3c schematisch dargestellten Verfahrensablauf erzielt, der im folgenden beschrieben wird:

Zu Beginn des Verfahrens, das von der Steuereinrichtung durchgeführt wird, werden Entscheidungskriterien für die Zuweisung der Trägerfrequenz f definiert. Hier wird der Raumwinkel w = 30° gewählt, so daß er der Richtstrahlbreite der Antennenanordnung entspricht. Für den später vorzugebenen Pegelbereich zP wird ein Pegelabstand S definiert, der dem zweifachen Dynamikumfang 2·dP = 80 dB des Funkempfängers entspricht. Das Verfahren verläuft iterativ, d.h. bei jedem Verbindungsaufbau wird die zulässige Zone Z neu bestimmt, mittels der bei einem nachfolgenden Verbindungsaufbau die Zuweisung der Trägerfrequenz f geprüft wird.

Dazu wird am Anfang des Verfahrens ein Laufindex n auf n = 1 gesetzt. Da noch keine Mobilstation mit der Funkfeststation in Verbindung steht, entspricht die zulässige Zone Z der gesamten Funkzelle.

### Schritte 1) bis 3):

Sobald eine erste Mobilstation MS1 mittels Signalsierung anzeigt, daß sie eine Funkverbindung wünscht, ermittelt die Funkfeststation BTS durch Auswertung der Signalisierungssignale die Raumrichtung Θn = Θ1 und den Empfangspegel Pn = P1. Anschließend erfolgt die Zuweisung der Trägerfrequenz f, falls die Mobilstation MSn = MS1 Parameter Θ1 und P1 aufweist, die in die zulässige Zone Z fallen. Da hier zu Beginn des Verfahrens die Zone Z den ganzen Pegelbereich (von 20 dBm bis -100 dBm) der Funkzelle erfaßt, ist obiges Kriterium erfüllt.

### Schritte 4) bis 7):

Danach wird ein Schutzbereich für die Mobilstation MS1 definiert, der einer für weitere Mobilstationen verbotenen Zone (Interferenzzone) entspricht. Dieser Schutzbereich umfaßt ein Winkelsegment mit dem Raumwinkel w = 30° und dem Pegelabstand S = 80 dB, wie in Fig. 3b dargestellt. Anschließend wird die zulässige Zone Z neu definiert, so daß sie alle Raumwinkel Θ erfaßt, die außerhalb des Schutzbereiches liegen, und alle Empfangspegel P umfaßt, die innerhalb des Pegelabstandes S liegen. Die zulässige Zone Z entspricht einem über die Raumrichtung Θ verteilten Pegelbereich zP, in dem der Empfangspegel P2 einer zweiten Mobilstation MS2 liegen muß, damit diese gleichfalls auf die Trägerfrequenz f aufgeschaltet werden kann (vergl. Fig. 3a und b). Nach einer Erhöhung des Laufindex n auf n = 2 werden die Schritte 1) bis 6) wiederholt.

Sobald die zweite Mobilstation MS2 eine Funkverbindung mit der Funkfeststation BTS wünscht, werden, wie oben beschrieben, die Raumrichtung Θ2 und der Empfangspegel P2 ermittelt sowie ein Schutzbereich um diese Mobilstation MS2 definiert (Wiederholung der Schritte 1 bis 4).

Da bereits mindestens zwei Schutzbereiche definiert wurden, wird die zulässige Zone Z jetzt auf solche Bereiche eingeschränkt, die zum einen noch nicht durch die Schutzbereiche abgedeckt sind und die zum andern in einem Pegelbereich zP liegen, der dem Überlappungsbereich aller den Schutzbereichen gemeinsamen Pegelbereiche S entspricht. Somit errechnet sich der Pegelbereich zP aus dem Abstand zwischen der kleinsten Pegelobergrenze Min (P+) = Min (P1 + s/2; P2 + s/2) und der größten Pegeluntergrenze Max (P-) = Min (P1 - s/2; P2 - s/2). Dieser Pegelbereich zP und damit auch die neue zulässige Zone Z gilt für eine weitere Mobilstation MS3, die eine Funkverbindung wünscht.

Die Verfahrensschritte 1) bis 6) werden für jede neu hinzukommende Mobilstation durchgeführt. Dadurch wird die Trägerfrequenz f innerhalb einer sich ändernden Zone Z zugewiesen, so daß möglichst viele Mobilstationen diese Trägerfrequenz f nutzen, ohne Interferenzen am Empfangsort (Funkfeststation BTS) zu erzeugen. Die zulässige Zone Z wird dabei an die Verteilung der Empfangspegel P1, P2 usw. angepaßt. Dadurch wird eine feste Seperation wie in Fig. 2 umgangen. Das Verfahren wird abgeschlossen, falls die zulässige Zone Z keine Bereiche mehr enthält, die sich zumindest über den vorgegeben Raumwinkel w erstrecken. Damit ist am Ende des Verfahrens die Trägerfrequenz voll ausgelastet, d.h. die Frequenzund Raumresourcen werden erschöpfend genutzt.

Um der Trägerfrequenz f noch mehr Mobilstationen, d.h. noch mehr Funkkanäle, aufzuschalten, sind Mehrfach-Funkübertragungen im TDMA (Time Division Multiple Access) oder im CDMA (Code Division Multiple Access) sowie in Kombination der beiden denkbar. Entsprechend dem oben beschriebenen Verfahren erfolgt dann die Zuweisung der Trägerfrequenz f für jeden TDMA- und/oder CDMA-Funkkanal.

Anhand von Fig. 4 wird nun eine Variante des'zweiten Ausführungsbeispiels beschrieben, die sich besonders zur Zuweisung von Trägerfrequenzen bei Mehrwegübertragung eignet.

Störungen durch Mehrwegübertragung (multipath transmission) treten besonders stark beim Mobilfunk auf und führen zu Problemen wie Mehrwegeschwund und Intersymbolinterferenzen. Weiterhin sind die bekannten Laufzeitmessungen der Funksignale zur Zuweisung der Trägerfrequenzen bei Mehrwegeempfang sehr ungenau und in Fällen von totaler Funkabschattung nicht anwendbar.

Erfindungsgemäß werden diese Probleme im wesentlichen bereits durch die beschriebene Auswertung der Empfangspegel überwunden. Um darüberhinaus auszuschließen, daß evtl. Mehrwegesignale einer Mobilstation in eine Empfangskeule einer eng benachbarten Mobilstation strahlen, werden die bereits beschriebenen Schutzbereiche erweitert.

Wie in Fig. 4 gezeigt wird der Raumwinkel w' eines Schutzbereiches bei einer Verringerung des räumlichen Abstandes X' der Mobilstation MS3 zur Funkfeststation BTS erweitert. Dieser Maßnahme liegt die Erkenntnis zugrunde, daß mit kleiner werdendem Abstand X' die Mehrwegesignale unter einem steiler werdenden Winkel in benachbarte Empfangskeulen eintreten können. Demnach sorgt diese Maßnahme im besonders kritischen Nachempfangsbereich (Kernzone der Funkzelle) für ausreichenden Abstand zwischen den einzelnen Mobilstationen MS1, MS2 und MS3.

In Fig. 4 sind die Aufenthaltsorte der Mobilstation eingezeichnet. Die aus den Fig. 2b und 3b entnehmbaren Markierungen, die den Empfangspegeln entsprechen, sind hier gestrichelt dargestellt. Dies soll veranschaulichen, daß zwei Mobilstationen (MS1 und MS2), die denselben räumlichen Abstand X zur Funkfeststation BTS haben, verschiedene Empfangspegel (P1 > P2) erzeugen können.

Um neben der erfindungsgemäßen Auswertung der Empfangspegel auch die Abstände X und X' zu ermitteln, wird eine Laufzeitmessung der Funksignale vorgeschlagen. Diese wird vorzugsweise bei ausreichendem Empfangspegel durchgeführt, der auf eine ungestörte Sichtfunkverbindung schließen läßt.

Die oben beschriebenen Verfahren werden von einer Steuereinrichtung durchgeführt, die mit der Funkeinrichtung verbunden und in die Funkfeststation BTS integriert ist (vergl. CTR in Fig. 1a). Diese Steuereinrichtung enthält im wesentlichen eine Mikroprozessorschaltung zur Durchführung von verfahrensgemäßen Steuerprogrammen. Zum Aufbau einer solchen Mikroprozessorschaltung eignet sich etwa der Digitale Signalprozessor "TMS 320 C40" von Texas Instruments. Es ist denkbar mittels einer solchen Steuereinrichtung auch mehrere Funkfeststationen zu steuern. Dazu sollte die Steuereinrichtung im SDMA-Funksystem so angeordnet sein, wie etwa eine sogenannte Funkfeststationssteuerung (Base Station Controller) in einem herkömmlichen Mobilfunksystem.

## Patentansprüche

1. Verfahren zur Zuweisung einer Trägerfrequenz (f) in einem space division multiple access <SDMA> -Funksystem mit einer Funkfeststation (BTS), die mittels einer Antennenanordnung (A) mit Richtcharakteristik aus verschiedenen Raumrichtungen (Θ1, Θ2, Θ3) Funksignale von entfernten Funkstationen (MS1, MS2, MS3) gleichzeitig auf dieser einen Trägerfrequenz (f) empfängt,
**dadurch gekennzeichnet,**
**daß** den entfernten Funkstationen (MS1, MS2, MS3) nur dann diese Trägerfrequenz (f) zugewiesen wird, falls die Raumrichtungen (Θ1, Θ2, Θ3) sich voneinander zumindest um einen vorgebbaren Raumwinkel (w) unterscheiden und falls die Funksignale am Ort der Funkfeststation (BTS) Empfangspegel (P1, P2, P3) erzeugen, die innerhalb eines vorgebbaren Pegelbereichs (zP) liegen.

2. Verfahren nach Anspruch 1,
**dadurch gekennzeichnet, daß** der Raumwinkel (w) so vorgegeben wird,
daß die Richtstrahlbreite (w) der Antennenanordnung (A) berücksichtigt wird.

3. Verfahren nach Anspruch 2,
**dadurch gekennzeichnet, daß** der Raumwinkel ein veränderbarer Raumwinkel (w') ist, der mit abnehmender Distanz (X') zwischen der Funkfeststation BTS und den entfernten Funkstationen (MS1, MS2, MS3) vergrößert wird.

4. Verfahren nach Anspruch 1,
**dadurch gekennzeichnet, daß** der Pegelbereich (zP) so vorgegeben wird, daß er einem Dynamikumfang (dP) angepaßt ist, den eine Funkvorrichtung (TRX) aufweist, die innerhalb der Funkfeststation (BTS) die Funksignale empfängt.

5. Verfahren nach Anspruch 1 oder 4,
**dadurch gekennzeichnet, daß** der Pegelbereich (zP) so vorgegeben wird, daß er einer Nebenzipfeldämpfung (d) angepaßt ist, die die Antennenanordnung (A) der Funkfeststation (BTS) aufweist.

6. Verfahren nach Anspruch 4 oder 5,
**dadurch gekennzeichnet, daß** der vorgebbare Pegelbereich um einen Betrag verringert wird, der einem geforderten Signal-Rausch-Abstand und/oder einer geforderten Funkschwund-Reserve entspricht.

7. Verfahren nach Anspruch 1,
**dadurch gekennzeichnet, daß** der Pegelbereich (zP) schrittweise neu vorgegeben wird, indem jeweils bei einem Verbindungsaufbau zwischen der Funkfeststation (BTS) und einer der entfernten Funkfeststationen (MS3) der Pegelbereich (zP) mittels einer Überlappung von um die Empfangspegel (P1, P2, P3) definierten Toleranzbereichen bestimmt wird.

8. Verfahren nach Anspruch 7,
**dadurch gekennzeichnet, daß** die Toleranzbereiche einen Pegelabstand (S) angeben, der dem Zweifachen eines Dynamikumfangs (dP) angepaßt ist, den eine Funkvorrichtung (TRX) aufweist, die innerhalb der Funkfeststation (BTS) die Funksignale empfängt.

9. Verfahren nach Anspruch 7 oder 8,
**dadurch gekennzeichnet, daß** die Toleranzbereiche einen Pegelabstand angeben, der einer Nebenzipfeldämpfung (d) angepaßt ist, die die Antennenanordnung (A) der Funkfeststation (BTS) aufweist.

10. Verfahren nach Anspruch 1,
**dadurch gekennzeichnet, daß** das Verfahren weiterhin zur Zuweisung einer anderen Trägerfrequenz, auf der die Funkfeststation (BTS) Funksignale an die entfernten Funkstationen (MS1, MS2, MS3) sendet, durchgeführt wird.

11. Verfahren nach Anspruch 1 oder 10,
**dadurch gekennzeichnet, daß** das Verfahren zur Zuweisung von TDMAund/oder CDMA-Funkkanälen durchgeführt wird.

12. Steuereinrichtung (CTR) für eine in einem SDMA-Funksystem angeordnete Funkfeststation (BTS), die mittels einer Antennenanordnung (A) mit Richtcharakteristik aus verschiedenen Raumrichtungen (Θ1, Θ2, Θ3) Funksignale von entfernten Funkstationen (MS1, MS2, MS3) gleichzeitig auf einer Trägerfrequenz (f) empfängt, mit einer prozessorgesteuerten Schaltung (µP), die mit einer Funkeinrichtung (TRX) der Funkfeststation (BTS) verbunden ist und die die empfangenen Funksignale zur Ermittlung der Raumrichtungen (Θ1, Θ2, Θ3) auswertet,
**dadurch gekennzeichnet,**
**daß** die prozessorgesteuerte Schaltung (µP) die empfangenen Funksignale zur Ermittlung ihrer Empfangspegel (P1, P2, P3) auswertet und mittels Steuerung einer Signalisierung an die entfernten Funkstationen (MS1, MS2, MS3) diesen nur dann die Trägerfrequenz (f) zuweist, falls die Raumrichtungen (Θ1, Θ2, Θ3) sich voneinander zumindest um einen vorgebbaren Raumwinkel (w) unterscheiden und falls die Empfangspegel (P1, P2, P3) der Funksignale innerhalb eines vorgebbaren Pegelbereichs (zP) liegen.

13. Funkfeststation (BTS) für ein SDMA-Funksystem, die eine Funkvorrichtung (TRX) und eine damit verbundene Antennenanordnung (A) mit Richtcharakteristik enthält, mittels denen die Funkfeststation (BTS) aus verschiedenen Raumrichtungen (Θ1, Θ2, Θ3) Funksignale von entfernten Funkstationen (MS1, MS2, MS3) gleichzeitig auf einer Trägerfrequenz (f) empfängt, und die eine mit der Funkeinrichtung (TRX) verbundene prozessorgesteuerte Schaltung (µP) enthält, die die empfangenen Funksignale zur Ermittlung der Raumrichtungen (Θ1, Θ2, Θ2) auswertet,
**dadurch gekennzeichnet,**
**daß** die prozessorgesteuerte Schaltung (µP) die empfangenen Funksignale zur Ermittlung ihrer Empfangspegel (P1, P2, P3) auswertet und mittels Steuerung einer Signalisierung an die entfernten Funkstationen (MS1, MS2, MS3) diesen nur dann die Trägerfrequenz (f) zuweist, falls die Raumrichtungen (Θ1, Θ2, Θ3) sich voneinander zumindest um einen vorgebbaren Raumwinkel (w) unterscheiden und falls die Empfangspegel (P1, P2, P3) der Funksignale innerhalb eines vorgebbaren Pegelbereichs (zP) liegen.

## Claims

1. Method for allocating a carrier frequency (f) in a space division multiple access (SDMA) radio system with a fixed radio station (BTS) which, by means of an antenna arrangement (A) having a directional characteristic, receives simultaneously, on this one carrier frequency (f), radio signals from different directions in space (Θ1, Θ2, Θ3) from remote radio stations (MS1, MS2, MS3),
**characterized in that**
this carrier frequency (f) is allocated to the remote radio stations (MS1, MS2, MS3) only if the directions in space (Θ1, Θ2, Θ3) differ from one another by at least a predefinable solid angle (w) and if, at the location of the fixed radio station (BTS), the radio signals generate reception levels (P1, P2, P3) which are within a predefinable level range (zP).

2. Method according to Claim 1,
**characterized in that** the solid angle (w) is predefined in such a way that the directional beam width (w) of the antenna arrangement (A) is taken into account.

3. Method according to Claim 2,
**characterized in that** the solid angle is a variable solid angle (w') which is increased as the distance (X') between the fixed radio station BTS and the remote radio stations (MS1, MS2, MS3) decreases.

4. Method according to Claim 1,
**characterized in that** the level range (zP) is defined in such a way that it is matched to a dynamic range (dP) of a radio device (TRX) which receives the radio signals within the fixed radio station (BTS).

5. Method according to either of Claims 1 or 4,
**characterized in that** the level range (zP) is predefined in such a way that it is matched to a side lobe attenuation (d) of the antenna arrangement (A) of the fixed radio station (BTS).

6. Method according to either of Claims 4 or 5,
**characterized in that** the predefinable level range is reduced by an amount which corresponds to a required signal-to-noise ratio and/or to a required radio fade margin.

7. Method according to Claim 1,
**characterized in that** the level range (zP) is progressively redefined **in that**, in each case, upon the establishment of a link between the fixed radio station (BTS) and one of the remote radio stations (MS3), the level range (zP) is determined by means of an overlap of tolerance ranges defined around the reception levels (P1, P2, P3).

8. Method according to Claim 7,
**characterized in that** the tolerances ranges indicate a level interval (S) which is matched to double a dynamic range (dP) of a radio device (TRX) which receives the radio signals within the fixed radio station (BTS).

9. Method according to either of Claims 7 or 8,
**characterized in that** the tolerance ranges indicate a level interval which is matched to a side lobe attenuation (d) of the antenna arrangement (A) of the fixed radio station (BTS).

10. Method according to Claim 1,
**characterized in that** the method is additionally executed for the purpose of allocating another carrier frequency, on which the fixed radio station (BTS) transmits radio signals to the remote radio stations (MS1, MS2, MS3).

11. Method according to either of Claims 1 or 10,
**characterized in that** the method is executed for the purpose of allocating TDMA radio channels and/or CDMA radio channels.

12. Control device CTR) for a fixed radio station (BTS), disposed in an SDMA radio system, which, by means of an antenna arrangement (A) having a directional characteristic, receives simultaneously, on one carrier frequency (f), radio signals from different directions in space (Θ1, Θ2, Θ3) from remote radio stations (MS1, MS2, MS3), comprising a processor-controlled circuit (µP) which is connected to a radio device (TRX) of the fixed radio station (BTS) and which evaluates the received radio signals for the purpose of determining the directions in space (Θ1, Θ2, Θ3),
**characterized in that**
the processor-controlled circuit (µP) evaluates the received radio signals for the purpose of determining their reception levels (P1, P2, P3) and, by means of control of a signalling to the remote radio stations (MS1, MS2, MS3), allocates the carrier frequency (f) to the latter only if the directions in space (Θ1, Θ2, Θ3) differ from one another by at least a predefinable solid angle (w) and if the reception levels (P1, P2, P3) of the radio signals are within a predefinable level range (zP).

13. Fixed radio station (BTS) for an SDMA radio system, which includes a radio device (TRX) and, connected thereto, an antenna arrangement (A) having a directional characteristic, by means of which the fixed radio station (BTS) receives simultaneously, on one carrier frequency (f), radio signals from different directions in space (Θ1, Θ2, Θ3) from remote radio stations (MS1, MS2, MS3), and which includes a processor-controlled circuit (µP), connected to the radio device (TRX), which evaluates the received radio signals for the purpose of determining the directions in space (Θ1, Θ2, Θ3),
**characterized in that**
the processor-controlled circuit (µP) evaluates the received radio signals for the purpose of determining their reception levels (P1, P2, P3) and, by means of control of a signalling to the remote radio stations (MS1, MS2, MS3), allocates the carrier frequency (f) to the latter only if the directions in space (Θ1, Θ2, Θ3) differ from one another by at least a predefinable solid angle (w) and if the reception levels (P1, P2, P3) of the radio signals are within a predefinable level range (zP).

## Revendications

1. Procédé pour l'attribution d'une fréquence porteuse (f) dans un système radio SDMA (Space Division Multiple Access) avec une station de base (BTS), qui reçoit au moyen d'une structure d'antenne (A) avec une caractéristique de direction à partir de différentes directions dans l'espace (θ1, θ2, θ3) des signaux radio de stations radio éloignées (MS1, MS2, MS3) simultanément sur cette fréquence porteuse (f),
**caractérisé en ce que**
on attribue cette fréquence porteuse (f) aux stations radio éloignées (MS1, MS2, MS3) seulement dans les cas où les directions dans l'espace (θ1, θ2, θ3) se différencient les unes des autres au moins d'un angle d'espace (w) prédéfinissable et si les signaux radio génèrent sur l'emplacement de la station de base (BTS) des niveaux de réception (P1, P2, P3) qui sont situés dans les limites d'une plage de niveau (zP) prédéfinissable.

2. Procédé selon la revendication 1,
**caractérisé en ce que** l'angle d'espace (w) est prédéfini de telle sorte que la largeur du faisceau hertzien (w) de la structure d'antenne (A) est prise en compte.

3. Procédé selon la revendication 2,
**caractérisé en ce que** l'angle d'espace est un angle d'espace (w') variable qui est agrandi avec la réduction de la distance (X') entre la station de base BTS et les stations radio (MS1, MS2, MS3) éloignées.

4. Procédé selon la revendication 1,
**caractérisé en ce que** la plage de niveau (zP) est prédéfinie de telle sorte qu'elle est adaptée à une étendue dynamique (dP) que présente un dispositif radio (TRX) qui reçoit les signaux radio à l'intérieur de la station de base (BTS).

5. Procédé selon la revendication 1 ou 4,
**caractérisé en ce que** la plage de niveau (zP) est prédéfinie de telle sorte qu'elle est adaptée à un affaiblissement des lobes secondaires (d) que présente la structure d'antenne (A) de la station de base (BTS).

6. Procédé selon la revendication 4 ou 5,
**caractérisé en ce que** la plage de niveau prédéfinissable est réduite d'une valeur qui correspond à un rapport signal-bruit exigé et/ou à une marge d'évanouissement radio exigée.

7. Procédé selon la revendication 1,
**caractérisé en ce que** la plage de niveau (zP) est redéfinie de façon progressive, en redéfinissant respectivement lors d'un établissement de liaison entre la station de base (BTS) et l'une des stations de base (MS3) éloignées la plage de niveau (zP) au moyen d'un chevauchement de plages de tolérance définies par les niveaux de réception (P1, P2, P3).

8. Procédé selon la revendication 7,
**caractérisé en ce que** les plages de tolérance indiquent un espacement de niveau (S) qui est adapté au double d'une étendue dynamique (dP) que présente un dispositif radio (TRX) qui reçoit les signaux radio à l'intérieur de la station de base (BTS)

9. Procédé selon la revendication 7 ou 8,
**caractérisé en ce que** les plages de tolérance indiquent un espacement de niveau qui est adapté à un affaiblissement des lobes secondaires (d) que présente la structure d'antenne (A) de la station de base (BTS).

10. Procédé selon la revendication 1,
**caractérisé en ce que** le procédé est appliqué également pour l'attribution d'une autre fréquence porteuse sur laquelle la station de base (BTS) envoie des signaux radio aux stations radio (MS1, MS2, MS3) éloignées.

11. Procédé selon la revendication 1 ou 10,
**caractérisé en ce que** le procédé est appliqué pour l'attribution de canaux radio TDMA et/ou CDMA.

12. Appareil de commande (CTR) pour une station de base (BTS) disposée dans le système radio SDMA, qui reçoit au moyen d'une structure d'antenne (A) avec un diagramme de directivité à partir de différentes directions dans l'espace (θ1, θ2, θ3) des signaux radio de stations radio (MS1, MS2, MS3) éloignées simultanément sur une fréquence porteuse (f), avec un circuit (µP) commandé par processeur qui est relié à un appareil radio (TRX) de la station de base (BTS) et qui analyse les signaux radio reçus pour la détermination des directions dans l'espace (θ1, θ2, θ3),
**caractérisé en ce que**
le circuit (µP) commandé par processeur analyse les signaux radio reçus pour le calcul de leurs niveaux de réception ( P1, P2, P3) et, au moyen d'un contrôle d'une signalisation sur les stations radio (MS1, MS2, MS3) éloignées, attribue la fréquence porteuse (f) à ces stations uniquement dans les cas où les directions dans l'espace (θ1, θ2, θ3) se différencient les unes des autres au moins d'un angle dans l'espace (w) prédéfinissable, et si les niveaux de réception (P1, P2, P3) des signaux radio sont disposés à l'intérieur d'une plage de niveau (zP) prédéfinissable.

13. Station de base (BTS) pour un système radio SDMA, qui contient un dispositif radio (TRX) et une structure d'antenne (A) reliée au dispositif avec caractéristique de directivité, au moyen desquels la station de base (BTS) reçoit de différentes directions dans l'espace (θ1, θ2, θ3) des signaux radio de stations radio éloignées (MS1, MS2, MS3) simultanément sur une fréquence porteuse (f), et qui contient un circuit (µP) commandé par processeur et relié à l'appareil radio (TRX), qui analyse les signaux radio reçus pour le calcul des directions dans l'espace (θ1, θ2, θ3),
**caractérisé en ce que**
le circuit (µP) commandé par processeur analyse les signaux radio reçus pour la détermination de leurs signaux de réception (P1, P2, P3) et, par contrôle d'une signalisation pour les stations radio (MS1, MS2, MS3) éloignées, attribue la fréquence porteuse (f) à ces stations uniquement dans les cas où les directions dans l'espace (θ1, θ2, θ3) se différencient les unes des autres au moins d'un angle dans l'espace prédéfini (w) prédifinissable et si les niveaux de réception (P1, P2, P3) des signaux radio se situent à l'intérieur d'une plage de niveau (zP) prédifinissable.
